Europäisches Patentamt

(19) European Patent Office

Office européen des brevets

(11) Publication number : **0 436 738 B1**

(12) **EUROPEAN PATENT SPECIFICATION**

(45) Date of publication of patent specification :
25.10.95 Bulletin 95/43

(51) Int. Cl.[6] : **G02F 1/135**

(21) Application number : **90911696.4**

(22) Date of filing : **03.08.90**

(86) International application number :
**PCT/JP90/00997**

(87) International publication number :
**WO 91/02429 21.02.91 Gazette 91/05**

(54) OPTICALLY WRITING PROJECTION-TYPE DISPLAY.

(30) Priority : **03.08.89 JP 200298/89**

(43) Date of publication of application :
**17.07.91 Bulletin 91/29**

(45) Publication of the grant of the patent :
**25.10.95 Bulletin 95/43**

(84) Designated Contracting States :
**DE FR GB**

(56) References cited :
**JP-A- 1 147 428**
**JP-A-63 109 422**
**JP-A-63 231 479**
**US-A- 3 869 195**

(56) References cited :
**SOVIET TECHNICAL PHYSICS LETTERS, vol. 14, no. 1, January 1988, New York, US, pp. 56-58 ; O.A. AFONIN : "Optically controllable transparencies based on structures consisting of a photoconductor and a polymer-encapsulated nematic liquid crystal"**
**PATENT ABSTRACTS OF JAPAN vol. 7, no. 35 (P-175)(1180) 18 November 1982 ; & JP-A-57 188 024**

(73) Proprietor : **NIPPON HOSO KYOKAI**
**2-1, Jinnan 2-chome**
**Shibuya-ku**
**Tokyo 150 (JP)**

(72) Inventor : **TAKIZAWA, Kuniharu, c/o NHK Technical Research Lab**
**10-11, Kinuta 1-chome,**
**Setagaya-ku**
**Tokyo 157 (JP)**

(74) Representative : **Beresford, Keith Denis Lewis et al**
**BERESFORD & Co.**
**2-5 Warwick Court**
**High Holborn**
**London WC1R 5DJ (GB)**

EP 0 436 738 B1

## Description

### TECHNICAL FIELD

The present invention relates to a light writing type projection display, and more particularly to a light writing type projection display which has a function that applies two-dimensional information, such as images or data patterns, to a spatial light modulator by using a write light beam, and displays the information in two-dimensional form by using display light beam.

### BACKGROUND ART

As conventional light writing type projection displays, the following apparatuses are known.

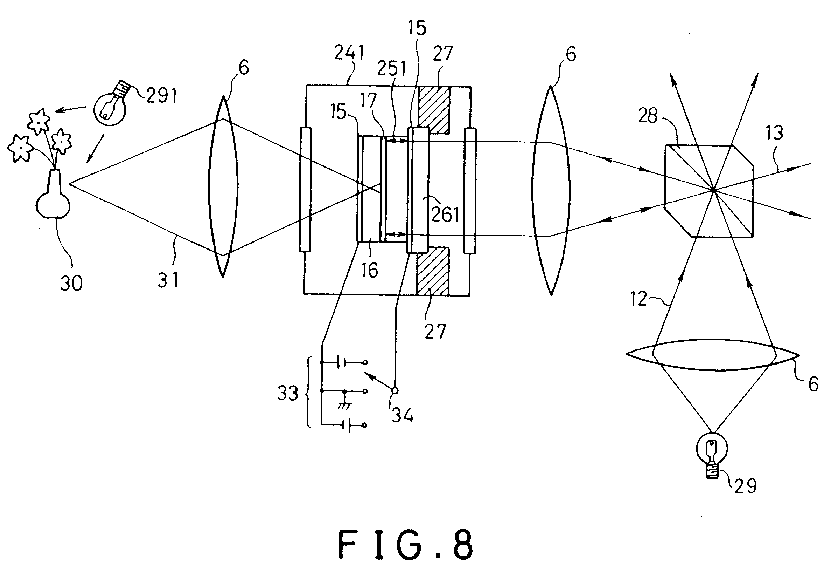

(1) REFERENCE 1 (G. MARIE: Ferroelectrics, 1976, Vol. 10, pp. 9-14) discloses a light writing type projection display as shown in Fig. 8. It is arranged such that a DKDP ($KD_2PO_4$) crystal 251, a $CaF_2$ holder 261, a dielectric mirror 17, a photoconductive layer 16, a pair of transparent electrodes 15 and Peltier cells 27 are sealed in a vacuum vessel 241. In Fig. 8, reference numeral 6 designates a pair of lenses, 28, a polarizing beam splitter, 29, a light source for display, 30, an object used as an input image, 291, a light source for illuminating the object, 31, an input light beam, 12, display light beam, 13, projected light beam, 33, a power source for driving the DKDP crystal 251 and the photoconductive layer 16, and 34, a switch.

In the arrangement, the input light beam 31 emitted from the light source 291 such as xenon lamp or halogen lamp for illumination, reaches the photoconductive layer 16 through the lens 6 and the transparent electrode 15. The photoconductive layer 16 changes its resistivity spatially in accordance with the intensity of the input image. Accordingly, the electric field distribution applied to the DKDP crystal 251 can undergo the spatial change when the driving power source 33 connected to the pair of the transparent electrodes 15 is turned on and off by the switch 34. During this process, an applied electric field is converted into a spatial distribution of refractive indices of the DKDP crystal by the electrooptic effect thereof. On the other hand, the display light beam 12 emitted from the display light source 29 is polarized by the polarizing beam splitter 28, passes through the lens 6, the $CaF_2$ holder 261 in the vacuum vessel 241, and the transparent electrode 15, illuminates the DKDP crystal 251, and is reflected on the dielectric mirror 17. After that, it is transmitted along the path in the opposite direction, passes the polarizing beam splitter 28, and is projected on a screen (not shown in figure) as the projected light beam 13.

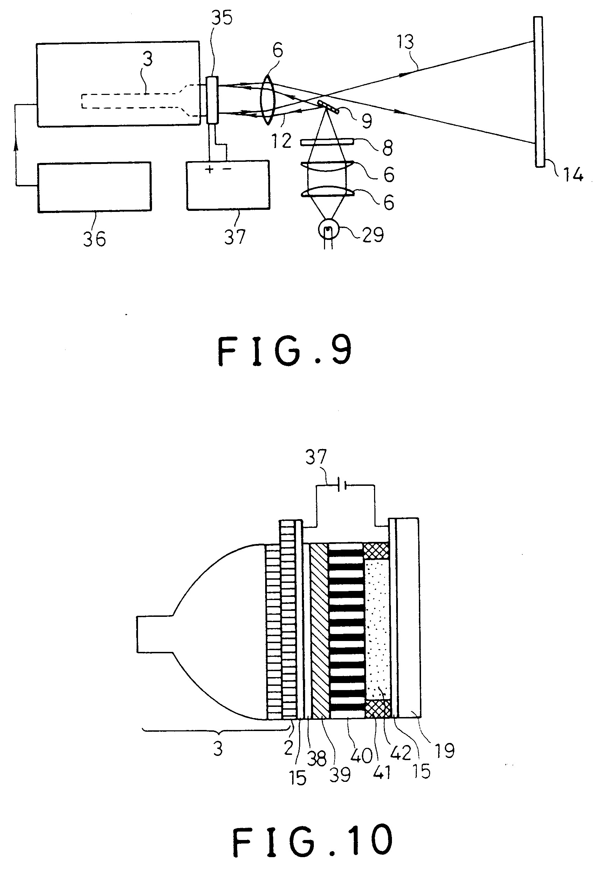

(2) REFERENCE 2 (Shigeru Yoshikawa, Masakatsu Horie, Hideo Takahashi, and Takaki Shimura: Journal of the Institute of Electronics and Communication Engineers of Japan, Vol. J59-C, No. 5 (1976) pp. 305 - 312) discloses a projection type display as shown in Fig. 9. It has a dynamic scattering mode type nematic liquid crystal light valve 35 stuck to a cathode ray tube 3 with a fiber optic faceplate. In Fig. 9, reference numeral 36 designates a signal generator, 37, a power source for driving the liquid crystal light valve 35, 29, a light source, 6, lenses, 8, a ultraviolet light cut filter, 9, a mirror, 12, a display light beam incident on the liquid crystal light valve 35, 13, a projected light beam, and 14, a screen. In the arrangement, the light beam emitted from the light source 29 passes through the lenses 6, the ultraviolet light cut filter 8, and is reflected on the mirror 9 to be thrown as the display light beam 12. Subsequently, it passes through the lens 6 and reaches the liquid crystal light valve 35. The projected light beam 13 emitted from the liquid crystal light valve 35 passes through the lens 6, and is projected onto the screen 14, thus being displayed as an image.

The dynamic scattering mode type nematic liquid crystal light valve 35 is arranged in such a manner that the following elements are integrally laminated in sequence as shown in Fig. 10: a transparent electrode 15 which is stuck on the fiber optic faceplate 2 of the cathode ray tube 3; a semitransparent electrode 38; an SeTe photoconductive layer 39; a wire plate 40; a spacer 41; nematic liquid crystals 42; a transparent electrode 15; and a glass substrate 19.

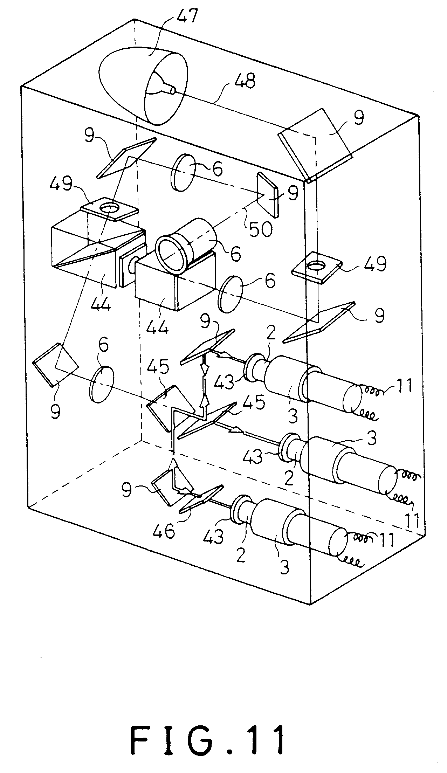

(3) REFERENCE 3 (A. G. Ledebuhr: SID 86 Digest (1986) pp. 379 - 382) discloses a projection type display as shown in Fig. 11. It has cathode ray tubes 3 each having a fiber optic faceplate 2 and a liquid crystal light valve 43 that sticks on the fiber optic face plate 2, polarizing beam splitters 44, and dichroic filters 45. In Fig. 11, reference numeral 11 designates input wires for feeding electric signals to the cathode ray tubes 3, 47, a light source, 48, a display light beam emitted from the light source 47, 46, a transparent plate for compensating the optical path length of the blue light, 49, an aperture, and 50, a projected light beam modulated by the three twisted nematic liquid crystal light valves 43.

In the arrangement, the display light beam 48 emitted from the light source 47 passes the mirror 9, the aperture 9, the mirror 9, and the lens 6, thus reaching the pair of polarizing beam splitters 44 and 44. Then it passes the mirror 9 and the lens 6, and is split into three beams by the pair of dichroic filters 45. The three beams enter the three twisted nematic liquid crystal light valves 43, respectively. On the other hand, the three light beams modulated by the three twisted nematic liquid crystal light valves 43 are coupled into one light beam by the pair of dichroic filters 45, and it passes the lens 6, the mirror 9, the polarizing beam splitter 44, the aperture 49, the mirror 9, the lens 6, and the mirror 9, and is projected to a screen not shown in this figure as the projected light beam 50. Thus, an image is displayed.

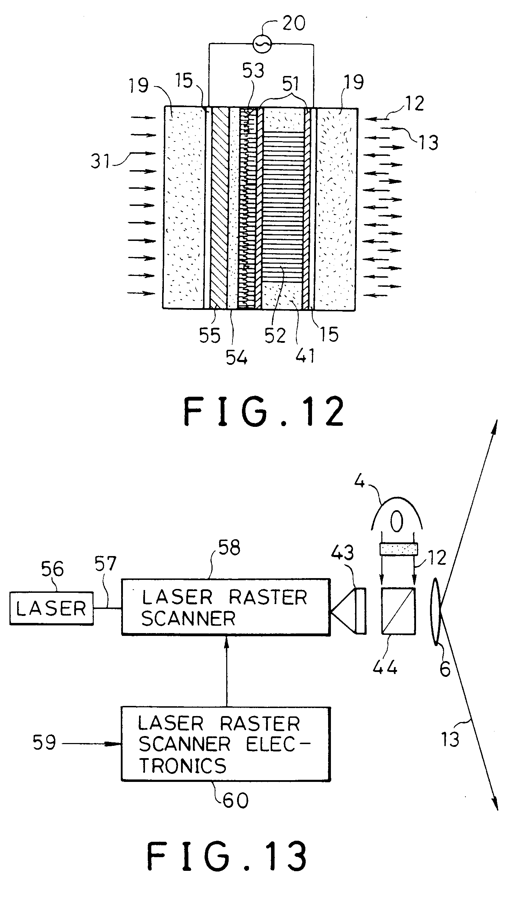

Each liquid crystal light valve 43 is arranged by laminating the following elements into a unit as shown in Fig. 12: an alignment layer 51, a nematic liquid crystal layer 52, an alignment layer 51, a dielectric multilayer mirror 53, a light absorption layer 54, a CdS photoconductive layer 55, and transparent electrodes attached to both ends of the laminated layers. In Fig. 12, reference numeral 41 denotes a spacer in which the nematic liquid crystals are retained by a peripheral seal, 20, an alternating-current power supply connected to the transparent electrodes 15, 19, glass plates which are stuck on an outer side of each transparent electrode 15, 31, an input light beam, 12, a display light beam incident on the liquid crystal light valve 43, and 13, a projected light beam.

(4) REFERENCE 4 (J. Trias, W. Robinson, and T. Phillips: SID 88 Digest (1988) pp. 99 - 101) discloses a projection type display as shown in Fig. 13. In this display, a write light beam 57 emitted from an argon ion laser 56 is incident on a twisted nematic liquid crystal light valve 43 through a laser raster scanner 58. On the other hand, a display beam 12 emitted from a xenon light source 4 is incident on the other surface of the liquid crystal light valve 43 through a polarizing beam splitter 44, and the reflected light beam thereon, namely, the projected light beam 13 is projected onto a screen (not shown in this figure) through a projection lens 6, thus displaying an image. In Fig. 13, reference numeral 59 designates an input electric signal, 60, a laser raster scanner electronics for driving the laser raster scanner 58 in accordance with the input electric signal 59.

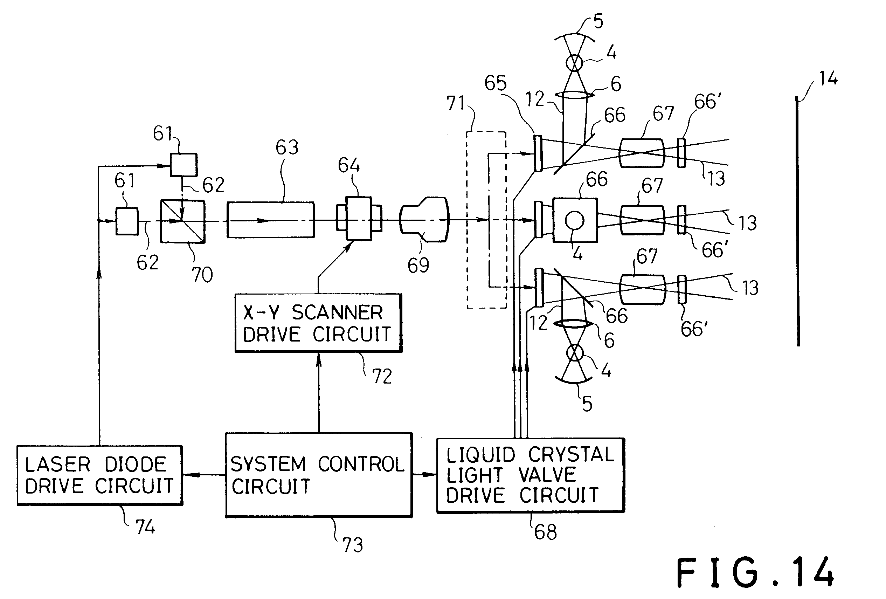

(5) REFERENCE 5 (Y. Mori, Y. Nagae, E. Kaneko, H. Kawakami, T. Hashimoto and H. Shiraishi: Displays April (1988) pp. 51 - 55) discloses a projection type display as shown in Fig. 14. In this figure, a write light beams 62 emitted from laser diodes 61 are incident on smectic liquid crystal light valves 65 through an X-Y scanner 64. On the other hand, display beams 12 emitted from xenon light sources 4 are incident on the other surfaces of liquid crystal light valves 65 through dichroic prisms 66, and the reflected beams on the valves are projected onto a screen 14 through a projection lenses 67. In Fig. 14, reference numeral 68 designates a liquid crystal light valve drive circuit, 66', wavelength filters, 69, a f-θ lens, 63, a collimating lens, 70, a polarizing prism, 71, a beam splitter, 72, an X-Y scanner drive circuit, 73, a system control circuit, and 74, a laser diode drive circuit.

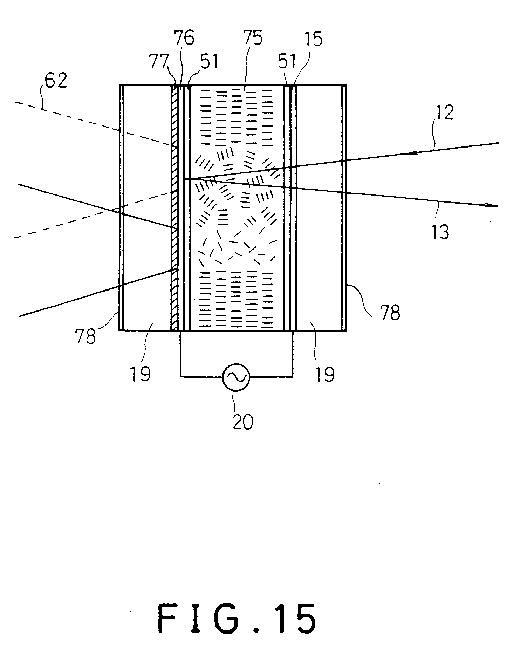

The smectic liquid crystal light valve 65 is arranged by laminating the following elements in sequence as shown in Fig. 15: a transparent electrode 15, an alignment layer 51, a smectic liquid crystal layer 75, an alignment layer 51, a metal mirror 76, a heat sinking layer 77, glass substrates 19 provided on both sides the layer unit, and antireflection films attached to the outer surfaces of the glass substrates 19.

The conventional light writing type projection displays described above have the following disadvantages.

(1) The projection type display of REFERENCE 1, which is described in (1) above and is shown in Fig. 8, uses the electrooptic effect of the DKDP crystal 251, resulting in the following.

(1-1) It necessitates a polarizer and an analyzer such as polarizing beam splitter 28. This reduces the availability of the display light beam to less than 50%.

(1-2) A broad spectral width of the display light beam 12 will reduce a contrast ratio of an image.

(1-3) As the DKDP crystal 251 is made thinner, the resolution will be improved. This, however, is difficult beyond a certain limit because a bulk single crystal cannot be thinned beyond a certain thickness by polishing (about 100 μm thick by current technique).

(1-4) It is difficult to obtain a DKDP crystal of a large area.

(1-5) It is difficult to display a high definition image because of the reasons described in (1-3) and (1-4).

(1-6) The Peltier cells 27 must be used to cool the DKDP crystal 251 to about -50 °C. This makes the arrangement complicated.

(1-7) The drive voltage is large.

Accordingly, the display of REFERENCE 1 is unsuitable for displaying a high resolution image.

(2) The projection type display of REFERENCE 2 which is described in (2) above, and is shown in Figs. 9 and 10 presents the following problems because dynamic scattering mode type nematic liquid crystals are used as the light valve 35.

(2-1) The speed of response of the liquid crystals is very slow.

(2-2) The power consumption of the liquid crystals is large, and the life of the liquid crystals is short because the liquid crystals are subjected to current drive.

(2-3) It has disadvantages such as a low contrast ratio of a displayed image. Accordingly, the display of REFERENCE 2 is unsuitable for displaying motion images.

(2-4) In addition, it uses the wire plate 40, which reduces the resolution.

(3) The projection type display of REFERENCE 3 which is described in (3) above, and is shown in Figs. 11 and 12 has the following problems because the liquid crystal light valve 43 uses the birefringence of the twisted nematic liquid crystals.

(3-1) The display has problems similar to those of (1-1), (1-3) and (1-4) with regard to the display described in (1).

(3-2) In addition, the variation of thickness of the liquid crystal layer must be restricted within about ±50nm over the entire layer. This makes it extremely difficult to fabricate a liquid crystal light valve of a large area and of a high, uniform quality.

(3-3) The speed of response of the liquid crystals and CdS photoconductive layer is slow.

Accordingly, the display of REFERENCE 3 is unsuitable for displaying a high resolution motion image.

(4) The projection type display of REFERENCE 4 which is described in (4) above, and is shown in Fig. 13 has the following problems because it uses the liquid crystal light valve 43 like that used in the display of (3) above.

(4-1) The display has problems similar to those of (3-1), (3-2) and (3-3) with regard to the display described in (3).

(4-2) In addition, the write light source 56 and the beam splitter 44 become more complicated.

(4-3) The laser raster scanner 58 makes the write light beam 57 perform two dimensional scanning by using a traveling-wave lens using the accoustooptic effect. This produces higher order diffraction light around a condensing spot, decreasing the resolution. Accordingly, the display of REFERENCE 4 is unsuitable for displaying high resolution motion images.

(5) The projection type display of REFERENCE 5 which is described in (5) above, and is shown in Figs. 14 and 15 operates on the following principle: it makes the write light beams 62 scan on the smectic liquid crystal light valves 65; converts the smectic liquid crystals retained in the liquid crystal light valves 65 from the homogeneous state to the scattered state by using the thermal energy of the write light beams 62; and transmits or scatters the display light beams 12. This poses the following problems.

(5-1) Although the resolution is high, the speed of response is very slow. For example, it takes tens of seconds or about a minute to display a piece of still image.

(5-2) It is difficult to display a gray scale image, that is, it is difficult to achieve full-color display.

(5-3) The beam scanner 64 must perform high precision scanning.

Accordingly, the display of REFERENCE 5 is unsuitable for displaying motion pictures.

Soviet Technical Physics Letters, Vol. 14, no. 1, January 1988, pages 56-58, discloses a nematic crystal matrix for the control of light. However the arrangement described in this publication has difficulties in providing high definition for a projection display when a high frequency driving voltage is used.

Accordingly from one aspect the present invention comprises a light writing type projection display device as claimed in claim 1.

From a second aspect the present invention comprises a light writing type projection display device for displaying colour images as claimed in claim 2.

The present invention, having arrangements mentioned above, can display high quality, bright images or data patterns, can convert optical wavelength, in particular, can quickly convert incoherent optical images into coherent optical images, or vice versa, and is suitable for displaying high definition motion images on a large screen. More specifically:

(A) The speed of response of the liquid crystal composition constituting the present invention is from milliseconds to tens of milliseconds, which is faster than those of dynamic scattering mode type liquid crystals or of twisted nematic liquid crystals. As a result, the projection type display of the present invention has a faster speed of response than the conventional projection type display previously described in (1) - (5) above, and so is more suitable for displaying motion images.

(B) The projection type display of the present invention can display images without using a polarizer and/or an analyzer because it uses the light scattering characteristic of the liquid crystal composition. Accordingly, the present invention can achieve bright display images with high spatial uniformity and a high contrast ratio. In addition, the present invention can solve the disadvantages of the conventional projection type displays: the disadvantages of the display described in (1) such as low availability of the display light beam, need for a high crystal polishing technique, reduction in a contrast ratio, need for a high parallelism of the display light beam, etc; the disadvantages of the display described in (3) such as low availability of the display light beam, difficulty in achieving a large area; and the disadvantages of the display described in (4) such as low availability of the display light beam, complication of the write light beam light source.

(C) The spatial light modulator of the present invention need not the liquid crystal alignment layers which are essential for the liquid crystal light valves of the conventional projection type displays described in (1), (3) and (4) above. Thus, the liquid crystal layer of the present invention is not arranged in such a manner that the liquid crystal layer of liquid state is sandwiched between the substrates. This makes it possible to enlarge the display screen, and greatly facilitates the fabrication of the device.

(D) The liquid crystal composition of the present invention can be greatly enlarged in comparison with the conventional liquid crystal cells that retain the liquid crystals of liquid state between substrates with a peripheral seal (see Figs. 10 and 12). In addition, the spatial light modulator of the liquid crystal composition can be easily enlarged by using an amorphous silicon film, for example, as a photoconductive layer. Thus, size matching with a conventional cathode ray tube can be carried out more easily.

(E) The electro-optic characteristics (optical transmittance T versus applied voltage V) of the liquid crystal composition has a smaller $\gamma(= dT/dV)$ value than that of the twisted nematic liquid crystals or the ferroelectric liquid crystals. This facilitates displaying analog images. Consequently, it is suitable for analog display.

(F) Using a liquid crystal television set in place of the cathode ray tube television set makes it possible to arrange a compact projection type display.

(G) The present invention has an advantage that it can display motion images by using a schlieren optical system.

The above and other features and advantages of the present invention will become more apparent from the following description of embodiments thereof taken in conjunction with accompanying drawings.

## BRIEF DESCRIPTION OF THE DRAWINGS

Fig. 1 is a schematic diagram showing an example of the arrangement of the light writing type projection display of the present invention;

Fig. 2 is a perspective view showing an example of the arrangement of the spatial light modulator that constitutes the arrangement of Fig. 1;

Figs. 3A and 3B are perspective views illustrating the operation of the liquid crystal composition that constitutes the spatial light modulator of Fig. 2;

Figs. 4 - 7 are schematic diagrams showing other examples of the arrangement of light writing type projection display of the present invention; and

Figs. 8 - 15 are schematic diagrams showing arrangements of conventional light writing type projection displays described in REFERENCES 1 - 5, and showing spatial light modulators that constitute the displays .

## BEST MODE FOR CARRYING OUT THE INVENTION

Embodiments of the present invention will be described with reference to the drawings.

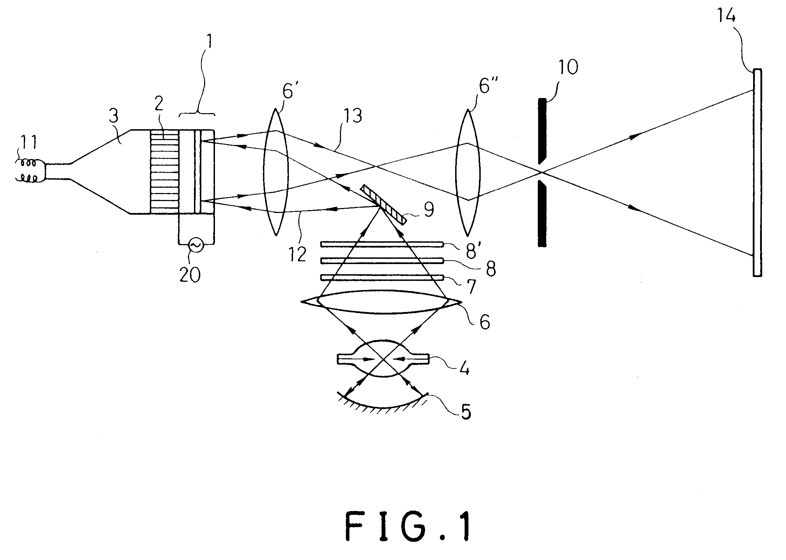

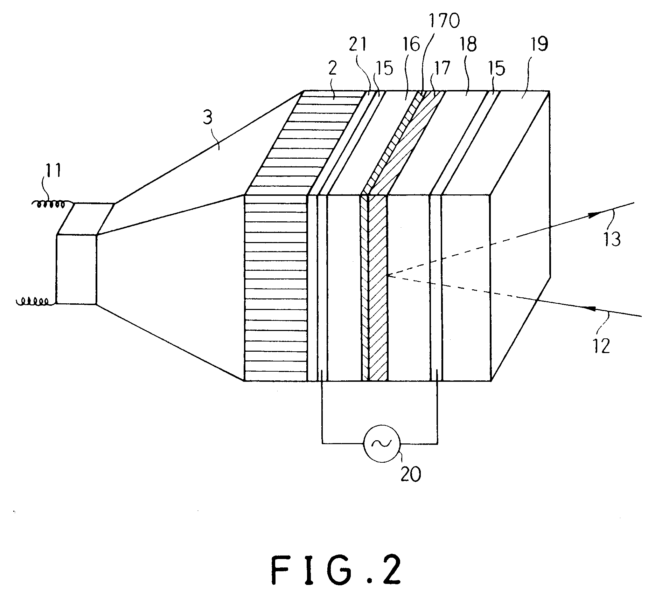

Fig. 1 shows schematically an arrangement of an embodiment of a light writing type projection display according to the present invention. In Fig. 1, reference numeral 1 designates a spatial light modulator which will be described in more detail with reference to Fig. 2 later, 2, a fiber optic faceplate, 3, a cathode ray tube. The image display glass faceplate of the cathode ray tube 3 is replaced by the fiber optic faceplate 2, and the spatial light modulator 1 is stuck on the fiber optic faceplate 2 via a transparent liquid layer. The cathode ray tube 3 converts an electric signal fed through input wires 11 into an optical image, the spectrum of which activates the photoconductive layer in the spatial light modulator 1.

Reference numeral 4 designates a display beam light source that operates as a visible light source by emitting white light. As the light source 4, a lamp such as a xenon lamp, halogen lamp or metal hydride lamp can be used. The white light emitted from the display beam light source 4 that has a concave mirror 5 passes a collecting lens 6, infrared cut filter 7, ultraviolet cut filter 8, and color filter 8', is reflected by a mirror 9 to change the path, passes a lens 6', and is incident onto the spatial light modulator 1. The lenses 6' and 6'', and an aperture 10 constitute an image formation optical system through which a projected light beam 13 reflected from the spatial light modulator 1 passes. The projected light beam 13 is then projected on a screen 14, thereby displaying an image. The spatial light modulator 1 is driven by an alternating-current power supply 20.

Fig. 2 shows an example of the arrangement of the spatial light modulator 1 of the embodiment shown in Fig. 1. As shown in Fig. 2, the spatial light modulator 1 is arranged by unitarily laminating the following elements in sequence: a transparent electrode 15; a photoconductive layer 16; a dielectric multilayer film mirror 17 that totally reflects the entire or a part of the visible spectrum; an insulating light absorption layer 170 that absorbs the light beam transmitted through the dielectric multilayer film mirror 17; a liquid crystal composition 18; an electrode 15; and a glass substrate 19. The alternating-current power supply 20 is connected to the two transparent electrodes 15. In addition, between the transparent electrode 15 sticking to the photoconductive layer 16 and the fiber optic faceplate 2, is inserted a transparent liquid layer 21 the refractive index of which is equal to that of the fiber optic faceplate 2, or to that of the transparent electrode 15, or to that between the two refractive indices.

The fiber optic faceplate 2 is integrally constructed with the cathode ray tube: one surface of the fiber optic faceplate 2 is in the cathode ray tube, whereas the other surface thereof is in contact with the liquid layer 21.

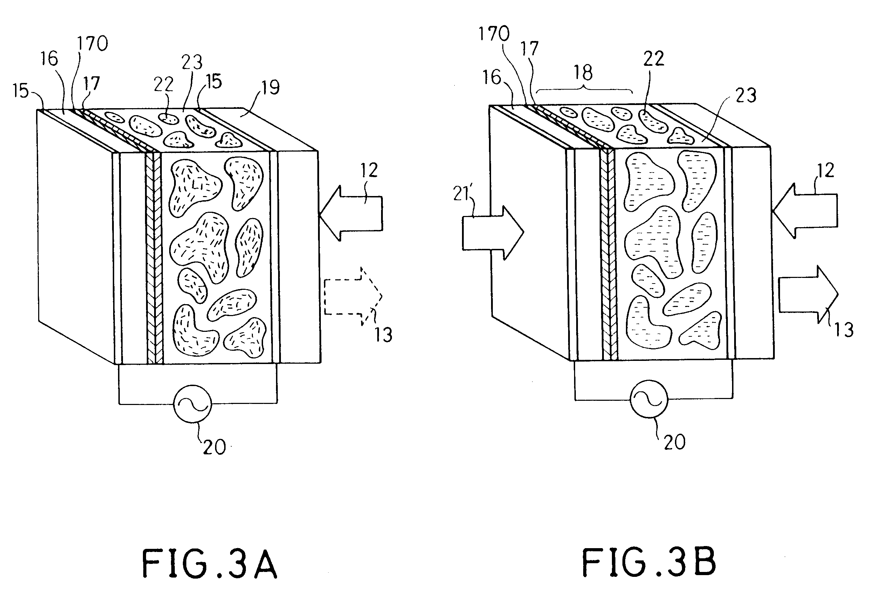

The liquid crystal composition 18 used in the present invention comprises a liquid crystals 22 and a resin matrix 23 as shown in Figs. 3A and 3B: the liquid crystals 22 consists of nematic liquid crystals, cholesteric liquid crystals, or smectic liquid crystals; the resin matrix 23 is made of a transparent resin which has the refractive index equal to the ordinary or extraordinary refractive index of the liquid crystals, or to the refractive index when the liquid crystals are oriented in random directions; and the liquid crystals 22 are enclosed and scattered in the resin matrix 23.

More specifically, the liquid crystal composition 18 of the present invention takes a form of one of the following three types: first, the complex 18 has the liquid crystals 22 which are enclosed and scattered in the resin matrix 23, the liquid crystals 22 being scattered taking various forms (the lengths of which are from hundreds of nanometers to a few tens micrometers) as shown in Figs. 3A and 3B, for example; second, the complex 18 has the liquid crystals 22 which are enclosed in the resin matrix 23 in a micro-capsule-like shape; and third, the complex 18 has the resin matrix 23 which is enclosed and scattered in the liquid crystals 22 (not shown in the drawings).

The liquid crystal composition 18 of such an arrangement, controls the light beam as follows: When the ordinary or extraordinary refractive index of the liquid crystals 22 is approximately equal to that of the resin matrix 23, the complex 18 is in the scattered state, in which the light beam is scattered, when the electric field is not applied to the liquid crystal composition 18 because the refractive indices of the liquid crystals 22 and the resin matrix 23 are different in this condition; on the other hand, the complex 18 is in the transparent state, in which the light beam is transmitted, when the electric field is applied to the liquid crystal composition 18 because the refractive indices of the liquid crystals 22 and the resin matrix 23 are approximately equal in this condition. Alternatively, when the refractive index of the randomly oriented liquid crystals 22 is approximately equal to that of the resin matrix 23, the liquid crystal composition 18 is in the transparent state because the refractive index of the liquid crystals 22 and that of the resin matrix are equal when the electric field is not applied. On the other hand, when the electric field is applied to the liquid crystal composition 18, the index of the liquid crystals 22 and that of the resin matrix 23 are different, and so the complex 18 is in the scattered state. Although either type of the liquid crystal composition 18 can be used in the present invention, the former type in which the ordinary or extraordinary refractive index of the liquid crystals 22 is equal to that of the resin matrix 23 is preferable. In particular, the type in which the ordinary refractive index of the liquid crystals 22 equals that of the resin matrix 23 is optimal in its performance.

The photoconductive layer 16 of the present invention as shown in Figs. 2 and 3 is made of a material that sharply decreases its impedance with the illumination, such as CdS, CdSe, Se, SeTe, GaAs, GaP, $Bi_{12}SiO_{20}$, $Bi_{12}GeO_{20}$, Si, hydrogen-doped amorphous silicon film, amorphous selenium film. Assuming that the impedances of the photoconductive layer 16 when illuminated and not illuminated by the write light beam are $Z_{ON}$ and $Z_{OFF}$, respectively, that the impedance of the liquid crystal composition 18 is $Z_{LC}$, and that the combined impedance of the dielectric multilayer film mirror 17 and the light absorption layer 170 is $Z_M$, the spatial light modulator 1 has the relationship expressed by the following equation (1).

$$Z_{OFF} > Z_{LC} > Z_{ON} \gg Z_M \quad (1)$$

When the thickness and the dielectric constant of the photoconductive layer 16 are specified as $t_1$ and $e_1$, the thickness and the dielectric constant of the liquid crystal composition 18 are defined as $t_2$ and $e_2$, and the thickness and the dielectric constant of the combination of the dielectric multilayer film mirror 17 and the light absorption layer 170 are specified as $t_3$ and $e_3$, the spatial light modulator 1 of the present invention has the relationship expressed by the following equation (2).

$$t_1/e_1 > t_2/e_2 \gg t_3/e_3 \quad (2)$$

Next, the operation of the light writing type projection display of the present invention will be described when the spatial light modulator 1 uses the liquid crystal composition 18 of the type in which the ordinary refractive index of the liquid crystals 22 is approximately equal to that of the resin matrix 23.

When the electric signal applied through the input wires 11 in Fig. 1 is zero, the emission intensity of the cathode ray tube 3 is also zero. As a result, almost all the voltage applied to the spatial light modulator 1 is applied to the photoconductive layer 16 according to equation (1), and so the voltage applied to the liquid crystal composition 18 is small. Consequently, the molecules of the liquid crystals 22 face various directions in conformity with the irregular surfaces of the resin matrix 23 as shown in Fig. 3A. In this case, the liquid crystals 22 have a refractive index which is different from the refractive index ($n_p$) of the resin matrix 23 surrounding the liquid crystals 22. Thus, the display light beam 12 is scattered in the liquid crystal composition 18 so that the projected light beam 13 takes the smallest intensity.

As the electric signal applied through the input wires 11 increases, the fluorescence 21' on the screen of the cathode ray tube 3 increases in accordance with the level of the electric signal. The fluorescence 21' illuminates the photoconductive layer 16 through the fiber optic face plate 2, and the fiber optic plate 2' thus decreasing the impedance of the photoconductive layer 16 so that the voltage applied to the liquid crystal composition 18 increases. When the level of the electric signal applied to the input wires 11 is sufficiently large, the longitudinal axes of the liquid crystal molecules of the liquid crystal composition 18 align in the direction of the applied electric field as shown in Fig. 3B. Thus, the display light beam 12 incident approximately normally on the liquid crystal composition 18 passes the liquid crystals 22 without scattering, because the ordinary refractive index no of the liquid crystals 22 is approximately equal to the refractive index np of the resin matrix 23. Consequently, the projected light beam 13 is reflected by the dielectric multilayer film mirror 17 and takes the maximum intensity.

In this case, the image projected on the screen 14 is a brightened and enlarged image of the original optical image emitted from the cathode ray tube 3. The spectra of the image projected on the screen 14 can be optionally selected by the color filter 8'. The contrast ratio and brightness of the image projected on the screen 14 can be adjusted by the aperture 10 functioning as a field stop: when the opening of the aperture 10 is made larger, the brightness of the projected image on the screen 14 increases, whereas the contrast ratio thereof decreases; in contrast with this, when the opening of the aperture 10 is made smaller, the contrast of the projected image on the screen 14 is improved, whereas the brightness decreases.

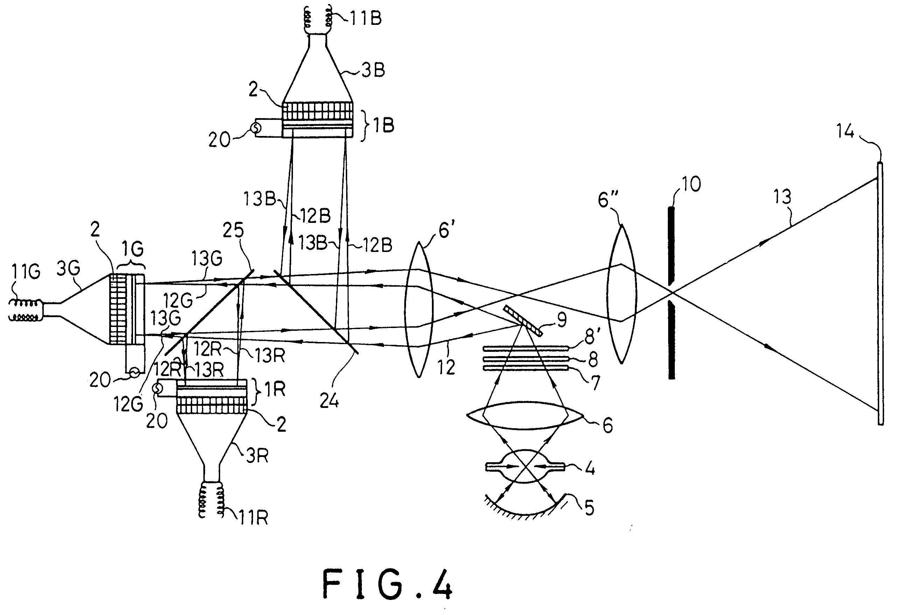

Fig. 4 shows another arrangement of the light writing type projection display of the present invention. The display of Fig. 4 is a full-color projection type display arranged by using three sets of basic arrangement each of which has a configuration including a cathode ray tube as shown in Fig. 1. In Fig. 4, reference numeral 24 designates a dichroic mirror that reflects a part of the light beam 12 and transmits the other part of the light beam 12, the part of the light beam 12 having the spectrum of blue or near blue light 12B (called the blue light beam 12B hereinafter) of the white light 12 emitted from the visual light source 4. Reference numeral 25 designates a dichroic mirror that reflects a part of the visible light that passes the dichroic mirror 24 and reflects the other part thereof, the part of the light beam having the spectrum of green or near green light 12G (called the green light beam 12G hereinafter), and the other part of the light beam having the spectrum of red or near red light 12R (called the red light beam 12R hereinafter).

In Fig. 4, reference numerals 1B and 3B designate a spatial light modulator and a cathode ray tube that respond to the blue light beam 12B, and convert the blue light beam 12B into the projected light beam 13B by modulating the blue light beam 12B. Reference numerals 1R and 3R designate a spatial light modulator and a cathode ray tube that respond to the red light beam 12R, and convert the red light beam 12R into the projected light beam 13R by modulating the red light beam 12R. Reference numerals 1G and 3G designate a spatial light modulator and a cathode ray tube that respond to the green light beam 12G, and convert the green light beam 12G into the projected light beam 13G by modulating the green light beam 12G. The respective projected light beams 13B, 13R and 13G are coupled to the projected light beam 13 by the dichroic mirrors 24 and 25, and the light beam 13 is projected onto the screen 14 to be displayed.

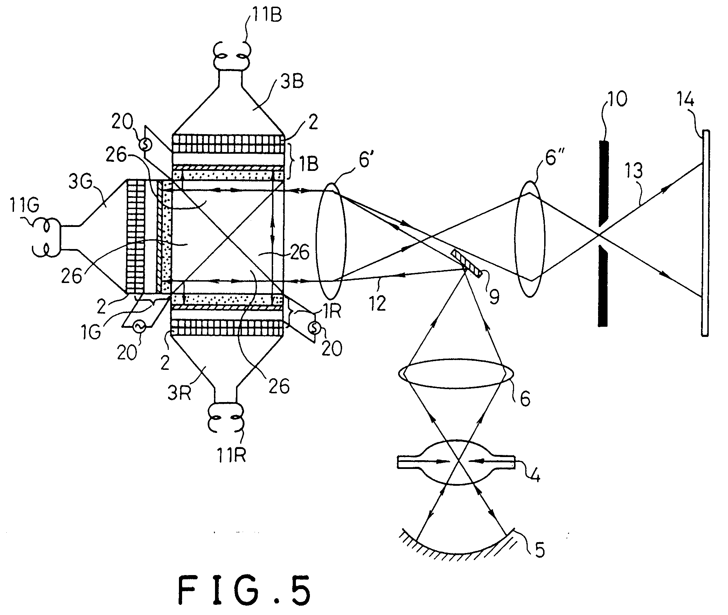

Fig. 5 shows still another arrangement of the light writing type projection display of the present invention. In the arrangement of Fig. 5, the dichroic mirrors 24 and 25 in the arrangement of Fig. 4 are removed and are replaced by four dichroic prisms 26. Incidentally, in Fig. 5, the light beams incident on and reflected from the spatial light modulators 1B, 1G and 1R are depicted as though they pass the same light paths, for simplicity. In reality, however, they pass slightly different paths as the light beams 12B and 13B, 12G and 13G, and 12R and 13R pass slightly different light paths as shown in Fig. 4.

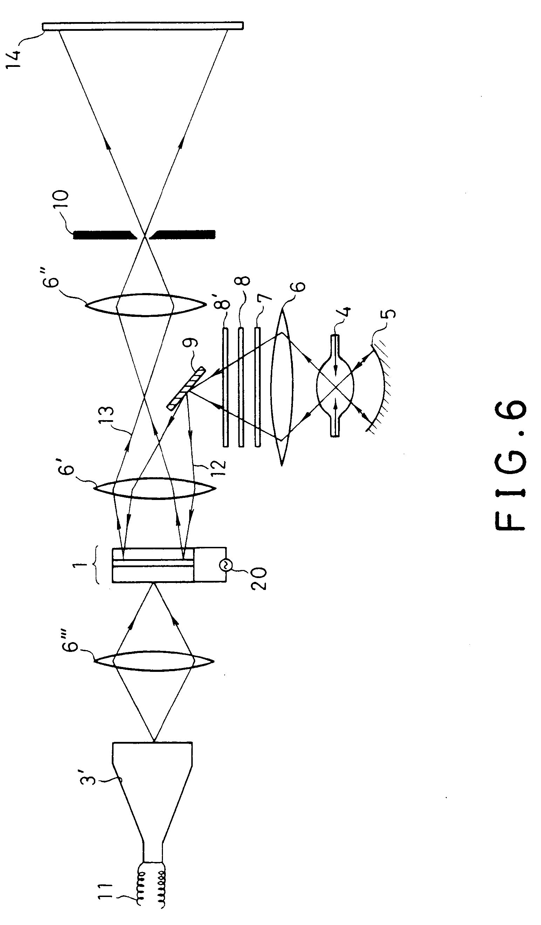

The light writing type projection display of the present invention can also use a common conventional cathode ray tube instead of the cathode ray tube with the fiber optic faceplate of Fig. 1. This type of display can be arranged as shown in Fig. 6: the image on a common conventional cathode ray tube 3' is focused on the spatial light modulator 1 through a lens 6'''. Likewise, the arrangements of the embodiments shown in Figs. 4 and 5 can use the combination of the common conventional cathode ray tube 3' and the lens 6''' in place of the cathode ray tube with the fiber optic faceplate.

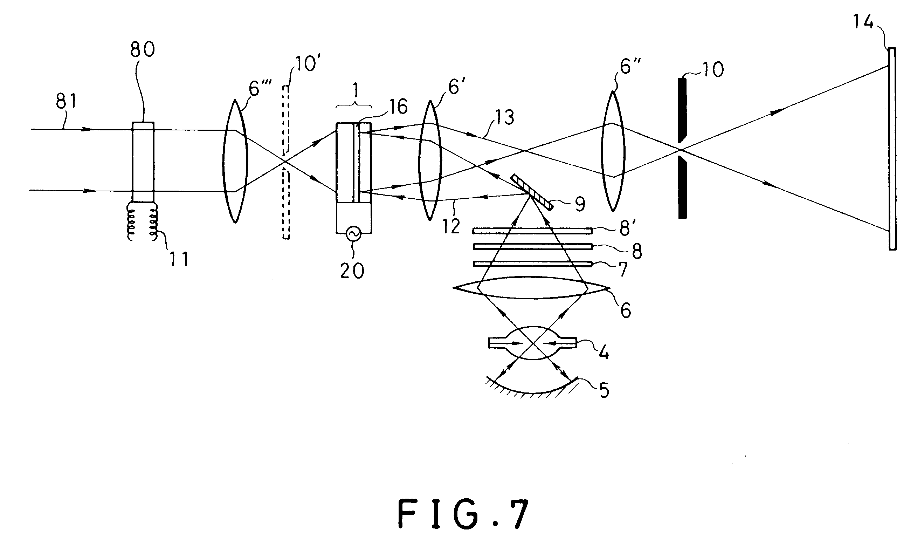

Furthermore, as shown in Fig. 7, the light writing type projection display of the present invention can use a liquid crystal television set 80 instead of the cathode ray tube in Fig. 6. In Fig. 7, reference numeral 81 designates a write light beam having such spectra that effectively produce the photoconductive effect of the photoconductive layer 16 constituting the spatial light modulator 1. In addition, inserting a second aperture 10' between the lens 6''' and the spatial light modulator 1 so as to make the write light beam 81 coherent light makes it possible to eliminate unnecessary images of the liquid crystal television set 80 (such images as wiring of the matrix or the thin film transistor circuitry of the set projected on the screen). This makes it possible to write only original images on the spatial light modulator 1, thus achieving high quality projected images without unevenness.

Furthermore, in the arrangements of the embodiments shown in Figs. 4 and 5, the combination of the liquid crystal television set 80 and the focusing lens 6''' can be used in place of the cathode ray tube with the fiber optic faceplate so as to construct the projection type displays.

Furthermore, in the arrangements of the embodiments shown in Figs. 4 and 5, the liquid crystal television set 83 can be used in place of the cathode ray tube with fiber optic faceplate so as to construct the projection type displays.

The projection type displays of the embodiments of the present invention described above with reference to Figs. 1, 4, 5, 6 and 7 adopt a schlieren optical system in which the optical paths of the display light beam 12 and the projected light beam 13 are different. Although the conventional projected type displays of Figs. 9 and 14 using the schlieren optical system can only display still images, the projected type displays of the present invention can display both the still and motion images. Alternatively, the mirror 9 of Figs. 1, 4, 5, 6 and 7 can be replaced with a half mirror (not shown) so that the optical paths of the display light beam 12 and the projected light beam 13 will coincide.

As a practical example, the display of Fig. 7 was set up by using the spatial light modulator 1 having the following elements: the photoconductive layer 16 of $Bi_{12}SiO_{20}$ of 0.5mm thick; the liquid crystal composition 18 of 20 µm thick, which was made of cyanobiphenyl based nematic liquid crystals and acryl resin; the transparent electrodes 15 of 70nm thick; and the transparent glass substrate 19 of 1mm thick. The display could achieve good projected images as expected. Here, as the liquid crystal television set 80, was used a three-inch black and white pocket type liquid crystal television set. As the light source 4, was used a 1kW xenon lamp, and as the color filter 8′, was used a color filter that cuts off the light beam whose wavelength was shorter than 560 nm. In addition, it was proved that the display of the embodiment was preferably used as a projection type display, particularly, as a large screen display: the display could reproduce motion images of 1.4 m × 1.1 m on the screen 14.

INDUSTRIAL APPLICABILITY

As described above, according to the present invention, the following distinctive effects can be obtained.

(1) The light writing type projection display of the present invention does not necessitate a polarizer and/or an analyzer. As a result, the display image of the present invention is of more than double the brightness of the image of the conventional projection type display that uses a polarizer and an analyzer.

(2) It does not necessitate the alignment processing which must be performed on the liquid crystals used in the conventional spatial light modulators. This makes it possible to fabricate large area spatial light modulators. Thus, high definition, bright, large area images can be easily displayed.

(3) It does not use the birefringence or optical rotatory power of liquid crystals. This reduces unevenness of images.

(4) It is not necessary to highly collimate the display light beam incident on the spatial light modulator, and hence, the light emission area of the display light source can be made rather large. This achieves bright display images.

(5) The projection type display of the present invention has a short response time compared with a conventional light writing type projection display that uses a spatial light modulator composed of twisted nematic liquid crystals or dynamic scattering mode type liquid crystals: the total time of the rising and falling times of the spatial light modulator used by the present invention is about milliseconds to tens of milliseconds; this is much shorter than the total time (of 50 milliseconds to hundreds of milliseconds) of the rising and falling times of the conventional light write type spatial light modulator using twisted nematic liquid crystals.

(6) Since the spatial light modulator used by the present invention exhibits an input-output optical characteristic the $\gamma$ value of which is small, it is preferably used for displaying an analog light images. In contrast, since the projection type display using a conventional light write type spatial light modulator has a large $\gamma$ value, which is not suitable for displaying analog light images.

(7) It can display motion images by using the schlieren optical system.

While the present invention has been described in detail with respect to preferred embodiments, it will be understood that numerous modifications, changes, variations and equivalents will be made by those skilled in the art without departing from the spirit and scope of the invention. Accordingly, it is intended that the invention herein be limited only by the scope of the appended claims.

**Claims**

1. A light writing type projection display device comprising:

a spatial light modulator (1) comprising in sequence an antireflection film (190); a glass substrate (19); a liquid crystal composition (18) having a thickness $t_2$ and dielectric constant $e_2$ and including one of the following types of liquid crystals, namely nematic, choresteric and smectic, and a transparent resin matrix, the liquid crystals being enclosed and scattered in the resin matrix, or the resin matrix being enclosed by and scattered in the liquid crystals; a dielectric multilayer film mirror (17) for reflecting visible light, an insulating light absorption layer (170) that absorbs light passing through the dielectric multilayer film mirror; a photoconductive layer (16)

having a thickness $t_1$ and dielectric constant $e_2$; a transparent electrode (15), and a fiber optic plate (2'); the resin matrix having a refractive index equal either to the ordinary or the extraordinary refractive index of the liquid crystals or equal to the refractive index of the liquid crystals when randomly oriented;

incident means which has a display device (3) adapted to illuminate the spatial light modulator with an optical image having spectra to which the photoconductive layer responds;

illumination means (5,6,9) which has a light source (4) for emitting white light onto the spatial light modulator as a display light beam; and

an image formation optical system (6',6",10) which causes light from the spatial light modulator to pass through a lens and an aperture to form an image, and makes the optical path of the light from the light source reflected from the spatial light modulator differ from the optical path of the optical image from the display device when an electric field is applied to the spatial light modulator, and characterised in that the following relationship holds between the thickness and dielectric constants of the photoconductive layer (16) and the liquid crystal composition (18), namely $t_1/e_1 > t_2/e_2$.

2. A light writing type projection display device for displaying colour images comprising:

a first, a second, and a third spatial light modulators (1A,1G,1B) each of which comprises in sequence an antireflection film (190); a glass substrate (19); a liquid crystal composition (18) having a thickness $t_2$ and dielectric constant $e_2$ and including one of the following types of liquid crystals, namely nematic, choresteric and smectic, and a transparent resin matrix, the liquid crystals being enclosed and scattered in the resin matrix, or the resin matrix being enclosed by and scattered in the liquid crystals; a dielectric multilayer film mirror (17) for reflecting visible light, an insulating light absorption layer (170) that absorbs light passing through the dielectric multilayer film mirror; a photoconductive layer (16) having a thickness $t_1$ and dielectric constant $e_2$; a transparent electrode (15), and a fiber optic plate (2'); the resin matrix having a refractive index equal either to the ordinary or the extraordinary refractive index of the liquid crystals or equal to the refractive index of the liquid crystals when randomly oriented;

incident means comprising a first, a second and a third display device (3R,3G,3B) each of which is associated with a respective one of said spatial light modulators and which respectively convert a blue, a green and a red input image signal into optical images each having spectra to which the photoconductive layer of the associated spatial light modulator responds, and which illuminates the associated spatial light modulator with the image;

optical means having a light source (4) and means (24,25,26) for separating from the light emitted from the light source, a first light beam of blue or near blue wavelength, a second light beam of green or near green wavelength, and a third light beam of red or near red wavelengths;

illumination means (6,9) for directing the first, second and third light beams onto the respective first, second and third spatial light modulators as display light beams; and

an image formation optical system (6',6",10) which causes light reflected from the first, second and spatial light modulators to pass through a lens and an aperture to form an image, and makes each optical path of light from the light source and reflected from the respective first, second and third spatial light modulators differ from the optical paths of the optical images from the respective display devices when electric fields are applied to the first, second and third spatial light modulators, and characterised in that the following relation holds between the thickness and dielectric constants of the photoconductive layer (16) and the liquid crystal composition of each of the spatial light modulators, namely $t_1/e_1 > t_2/e_2$.

3. A device according to claim 2, and characterised in that the optical axis of one of the display devices is substantially orthogonal to the optical axes of the other display devices.

4. A device according to claim 3, wherein the optical axes of said other display devices are parallel to one another.

5. A device as claimed in either claim 3 or claim 4, and characterised in that the means for separating the light from the light source comprise a pair of dichroic means (24,25).

6. A device as claimed in claim 3, and characterised in that the display devices and their associated spatial light modulators are substantially symmetrically arranged around four dichroic prisms (26).

7. A device as claimed in either claim 1 or any one of claims 2 to 6 and characterised in that the or each display device (3,3B,etc) is a cathode ray tube.

8. A device as claimed in claim 7, characterised in that the or each cathode ray tube has a fiber optic faceplate (2) as its image display screen, and the fiber optic faceplate is secured to the associated spatial light modulator via a transparent liquid layer the refractive index of which is close to that of the fiber optic faceplate.

9. A device as claimed in either claim 1 or any one of claims 2 to 6, and characterised in that the or each display device is a liquid crystal television set (80) which is illuminated by a light beam having spectra to which the photoconductive layer of the spatial light modulator responds, and the light beam is a light beam incident upon the photoconductive layer after passing through the liquid crystal television set.

10. A device as claimed in claim 9, characterised in that the liquid crystal television set has a fiber optic plate (2″) with a common and transparent electrode, and the fiber optic plate of the liquid crystal television set is secured to the fiber optic plate of the spatial light modulator via a polarizer and a transparent liquid layer of the refractive index of which is close to that of the fiber optic plate.

**Patentansprüche**

1. Projektionsanzeigeeinrichtung vom Lichtschreibetyp, die folgendes aufweist:
   einen räumlichen Lichtmodulator bzw. Raumlichtmodulator (1), der in Sequenz bzw. unter Beachtung der Reihenfolge folgendes aufweist: eine Antireflektions- bzw. Antireflexschicht (190), ein Glassubstrat (19); eine Flüssigkristallzusammensetzung (18) mit einer Dicke $t_2$ und einer Dielektrizitätskonstante $e_2$ und die einen der folgenden Typen von Flüssigkristallen, nämlich nematische, cholesterische und smektische, und eine transparente bzw. durchsichtige Harzmatrix aufweist, wobei die Flüssigkristalle in der Harzmatrix eingeschlossen und zerstreut sind, oder die Harzmatrix von den Flüssigkristallen umschlossen und in diesen zerstreut ist; einen dielektrischen Vielschichtspiegel bzw. vielschichtigen beschichteten Spiegel (17) zum Reflektieren von sichtbarem Licht, eine isolierende Lichtabsorptionsschicht (170), die Licht absorbiert, das durch den dielektrischen Vielschichtspiegel läuft; eine photoleitende Schicht (16) mit einer Dicke $t_1$ und einer Dielektrizitätskonstante $e_2$; eine transparente bzw. durchsichtige Elektrode (15), und eine Fiberoptikplatte (2′); wobei die Harzmatrix einen Brechungsindex besitzt, und zwar gleich entweder dem ordentlichen oder dem außerordentlichen Brechungsindex der Flüssigkristalle oder gleich dem Brechungsindex der Flüssigkristalle, wenn sie zufällig orientiert sind;
   Einfallsmittel mit einer Anzeigeeinrichtung (3) geeignet zum Beleuchten des räumlichen Lichtmodulators mit einem optischen Bild, das Spektren aufweist, auf die die photoleitende Schicht anspricht,
   Beleuchtungsmittel (5, 6, 9) mit einer Lichtquelle (4) zum Emittieren weißen Lichts auf den räumlichen Lichtmodulator als ein Anzeigelichtstrahl; und ein Bilderzeugungsoptiksystem bzw. ein ein bildformendes optisches System (6′, 6″, 10), das veranlaßt, daß Licht von dem räumlichen Lichtmodulator durch eine Linse und eine Apertur bzw. Öffnung läuft, um ein Bild zu bilden, und den optischen Pfad des Lichts von der Lichtquelle, das von dem räumlichen Lichtmodulator reflektiert wurde, von dem optischen Pfad des optischen Bildes von der Anzeigeeinrichtung verschieden macht bzw. sich unterscheiden läßt, wenn ein elektrisches Feld an den räumlichen Lichtmodulator angelegt wird, und dadurch **gekennzeichnet,** daß die folgende Beziehung zwischen der Dicke und den Dielektrizitätskonstanten der photoleitenden Schicht (16) und der Flüssigkristallzusammensetzung (18), nämlich $t_1/e_1 > t_2/e_2$ gilt.

2. Projektionsanzeigeeinrichtung vom Lichtschreibetyp zum Anzeigen von Farbbildern, die folgendes aufweist:
   einen ersten, einen zweiten und einen dritten räumlichen Lichtmodulator bzw. Raumlichtmodulator (1A, 1G, 1B), von denen jeder in Sequenz bzw. unter Beachtung der Reihenfolge folgendes aufweist: eine Antireflektions- bzw. Antireflexschicht (190); ein Glassubstrat (19); eine Flüssigkristallzusammensetzung (18) mit einer Dicke $t_2$ und einer Dielektrizitätskonstante $e_2$, die einen der folgenden Typen von Flüssigkristallen aufweist, nämlich nematische, cholesterische und smektische, und eine transparente bzw. durchsichtige Harzmatrix, wobei die Flüssigkristalle in der Harzmatrix eingeschlossen und verstreut sind, oder wobei die Harzmatrix durch die Flüssigkristalle eingeschlossen und in diesem zerstreut ist, einen dielektrischen Vielschichtspiegel bzw. vielschichtigem bechichtetem Spiegel (17) zum Reflektieren von sichtbarem Licht, eine isolierende Lichtabsorptionsschicht (170), die Licht absorbiert, das durch den dielektrischen Vielschichtspiegel läuft; eine photoleitende Schicht (16) mit einer Dicke $t_1$ und einer Dielektrizitätskonstanten $e_2$; eine transparente bzw. durchsichtige Elektrode (15) und eine Fiberoptikplatte (2′); wobei die Harzmatrix einen Brechungsindex gleich entweder dem ordentlichen oder dem außerordentlichen Brechungsindex der Flüssigkristalle oder gleich dem Brechungsindex der Flüssigkristalle, wenn sie zufällig orientiert sind, besitzt;

Einfallsmittel mit einer ersten, einer zweiten und einer dritten Anzeigeeinrichtung (3R, 3G, 3B), von denen jede mit einem jeweiligen der räumlichen Lichtmodulatoren assoziiert ist und die jeweils ein blaues, ein grünes und ein rotes Eingangsbildsignal in optische Bilder konvertiert bzw. wandelt, wobei jedes Spektren besitzt, auf die die photoleitende Schicht des assoziierten räumlichen Lichtmodulators anspricht, und das den assoziierten räumlichen Lichtmodulator mit dem Bild beleuchtet;

optische Mittel, die folgendes aufweisen: eine Lichtquelle (4) und Mittel (24, 25, 26) zum Trennen von dem von der Lichtquelle emittierten Licht, und zwar einen ersten Lichtstrahl einer blauen oder fast blauen Wellenlänge, einen zweiten Lichtstrahl einer grünen oder fast grünen Wellenlänge und einen dritten Lichtstrahl von roten oder fast roten Wellenlängen;

Beleuchtungsmittel (6, 9) zum Leiten bzw. Richten der ersten, zweiten und dritten Lichtstrahlen auf die jeweiligen ersten, zweiten und dritten räumlichen Lichtmodulatoren als Anzeigelichtstrahlen; und ein Bilderzeugungsoptiksystem bzw. ein ein bildformendes optisches System (6', 6", 10), das Licht veranlaßt von den ersten, zweiten und räumlichen Lichtmodulatoren reflektiert zu werden, um durch eine Linse und eine Apertur bzw. Öffnung zu laufen, um ein Bild zu formen, und das jeden optischen Lichtpfad von der Lichtquelle und reflektiert von den jeweiligen ersten, zweiten und dritten räumlichen Lichtmodulatoren unterschiedlich macht bzw. sich unterscheiden läßt von den optischen Pfaden der optischen Bilder von den jeweiligen Anzeigeeinrichtungen, wenn elektrische Felder an die ersten, zweiten und dritten räumlichen Lichtmodulatoren angelegt werden und dadurch **gekennzeichnet,** daß die folgende Beziehung zwischen der Dicke und den Dielektrizitätskonstanten der photoleitenden Schicht (16) und der Flüssigkristallzusammensetzung jedes der räumlichen Lichtmodulatoren, nämlich $t_1/e_1 > t_2/e_2$ gilt.

3. Einrichtung nach Anspruch 2 und dadurch gekennzeichnet, daß die optische Achse einer der Anzeigeeinrichtungen im wesentlichen orthogonal zu den optischen Achsen der anderen Anzeigeeinrichtungen ist.

4. Einrichtung nach Anspruch 3, wobei die optischen Achsen der anderen Anzeigeeinrichtungen parallel zueinander sind.

5. Einrichtung nach Anspruch 3 oder 4, dadurch gekennzeichnet, daß die Mittel zum Trennen des Lichts von der Lichtquelle ein Paar von dichroitischen Mitteln (24, 25) aufweisen.

6. Einrichtung nach Anspruch 3, dadurch gekennzeichnet, daß die Anzeigeeinrichtungen und ihre assoziierten bzw. zugehörigen räumlichen Lichtmodulatoren im wesentlichen symmetrisch um vier dichroitische Prismen (26) angeordnet sind.

7. Einrichtung nach einem der vorhergehenden Ansprüche, dadurch gekennzeichnet, daß die bzw. jede Anzeigeeinrichtung (3, 3B, etc.) eine Kathodenstrahlröhre ist.

8. Einrichtung nach Anspruch 7, dadurch gekennzeichnet, daß die bzw. jede Kathodenstrahlröhre eine Fiberoptikstirnseitenplatte (2) als ihr Bildanzeigeschirm besitzt, und, daß die Fiberoptikstirnseitenplatte an dem zugehörigen räumlichen Lichtmodulator gesichert bzw. befestigt ist, und zwar über eine transparente bzw. durchsichtige flüssige Schicht, deren Brechungsindex dicht bei dem der Fiberoptikstirnseitenplatte ist.

9. Einrichtung nach einem der Ansprüche 1 bis 6, dadurch gekennzeichnet, daß die bzw. jede Anzeigeeinrichtung ein Flüssigkristallfernseher bzw. -(bild)schirm 80 ist, der durch einen Lichtstrahl beleuchtet wird, der Spektren besitzt, auf die die photoleitende Schicht des räumlichen Lichtmodulators anspricht, und dadurch gekennzeichnet, daß der Lichtstrahl ein Lichtstrahl ist, der auf die photoleitende Schicht auftrifft, nachdem er durch den Flüssigkristallfernseher passiert bzw. verlaufen ist.

10. Einrichtung nach Anspruch 9, dadurch gekennzeichent, daß der Flüssigkristallfernseher eine Fiberoptikplatte (2") mit einer gemeinsamen und transparenten bzw. durchsichtige Elektrode besitzt und dadurch, daß die Fiberoptikplatte des Flüssigkristallfernsehers an die Fiberoptikplatte des räumlichen Lichtmodulators über einen Polarisator und eine transparente bzw. lichtdurchlässige flüssige Schicht, deren Brechungsindex dicht bei dem der Fiberoptikplatte ist, gesichert bzw. befestigt ist.

## Revendications

1. Un dispositif de visualisation à projection du type à écriture optique, comprenant :

un modulateur de lumière spatial (1) comprenant successivement une pellicule antireflet (190); un substrat en verre (19); une composition de cristaux liquides (18) ayant une épaisseur $t_2$ et une constante diélectrique $e_2$, et comprenant l'un des types suivants de cristaux liquides : nématique, cholesterique et smectique, et une matrice en résine transparente, les cristaux liquides étant enfermés et dispersés dans la matrice en résine, ou bien la matrice en résine étant enfermée par les cristaux liquides et dispersée dans ceux-ci; un miroir à pellicule diélectrique multicouche (17) pour réfléchir la lumière visible; une couche isolante d'absorption de lumière (170) qui absorbe la lumière passant par le miroir à pellicule diélectrique multicouche; une couche photoconductrice (16) ayant une épaisseur $t_1$ et une constante diélectrique $e_1$; une électrode transparente (15) et une lame à optique de fibres (2'); la matrice en résine ayant un indice de réfraction égal à l'indice de réfraction ordinaire, ou à l'indice de réfraction extraordinaire des cristaux liquides, ou égal à l'indice de réfraction des cristaux liquides lorsqu'ils sont orientés de manière aléatoire;

des moyens d'application de lumière incidente qui comportent un dispositif de visualisation (3) conçu pour illuminer le modulateur de lumière spatial avec une image optique ayant des spectres auxquels la couche photoconductrice réagit;

des moyens d'illumination (5, 6, 9) qui ont une source de lumière (4) pour émettre de la lumière blanche sur le modulateur de lumière spatial, à titre de faisceau de lumière de visualisation; et

un système optique de formation d'image (6', 6'', 10) qui fait passer la lumière provenant du modulateur de lumière spatial par une lentille et une ouverture, pour former une image, et qui fait en sorte que le chemin optique de la lumière provenant de la source de lumière qui est réfléchie par le modulateur de lumière spatial diffère du chemin optique de l'image optique provenant du dispositif de visualisation, lorsqu'un champ électrique est appliqué au modulateur de lumière spatial, et caractérisé en ce que la relation suivante : $t_1/e_1 > t_2/e_2$ est établie entre les épaisseurs et les constantes diélectriques de la couche photoconductrice (16) et de la composition de cristaux liquides (18).

2. Un dispositif de visualisation à projection du type à écriture optique, pour visualiser des images en couleurs, comprenant :

un premier, un second et un troisième modulateurs de lumière spatiaux (1A, 1G, 1B), comprenant chacun successivement une pellicule antireflet (190); un substrat en verre (19); une composition de cristaux liquides (18) ayant une épaisseur $t_2$ et une constante diélectrique $e_2$, et contenant l'un des types suivants de cristaux liquides: nématique, cholestérique et smectique, et une matrice en résine transparente, les cristaux liquides étant enfermés et dispersés dans la matrice en résine, ou bien la matrice en résine étant enfermée par les cristaux liquides et dispersée dans ceux-ci; un miroir à pellicule diélectrique multicouche (17) pour réfléchir la lumière visible, une couche isolante d'absorption de lumière (170) qui absorbe la lumière passant par le miroir à pellicule diélectrique multicouche; une couche photoconductrice (16) ayant une épaisseur $t_1$ et une constante diélectrique $e_1$; une électrode transparente (15), et une lame à optique de fibres (2'); la matrice en résine ayant un indice de réfraction égal à l'indice de réfraction ordinaire ou à l'indice de réfraction extraordinaire des cristaux liquides, ou égal à l'indice de réfraction des cristaux liquides lorsqu'ils sont orientés de façon aléatoire;

des moyens d'application de lumière incidente comprenant un premier, un second et un troisième dispositifs de visualisation (3R, 3G, 3B), chacun d'eux étant associé à l'un respectif des modulateurs de lumière spatiaux et convertissant respectivement un signal d'image d'entrée bleu, un signal d'image d'entrée vert et un signal d'image d'entrée rouge en images optiques ayant chacune des spectres auxquels la couche photoconductrice du modulateur de lumière spatial associé réagit, et illuminant avec l'image le modulateur de lumière spatial associé;

des moyens optiques ayant une source de lumière (4) et des moyens (24, 25, 26) pour séparer de la lumière émise par la source de lumière, un premier faisceau de lumière dont la lumière d'onde correspond au bleu ou est proche du bleu, un second faisceau de lumière dont la longueur d'onde correspond au vert ou est proche du vert, et un troisième faisceau de lumière dont la longueur d'onde correspond au rouge ou est proche du rouge;

des moyens d'illumination (6, 9) pour diriger les premier, second et troisième faisceaux de lumière sur les premier, second et troisième modulateurs de lumière spatiaux respectifs, à titre de faisceaux de lumière de visualisation; et

un système optique de formation d'image (6', 6'', 10) qui fait passer la lumière réfléchie par les premier, second et troisième modulateurs de lumière spatiaux par une lentille et une ouverture, pour former une image, et qui fait en sorte que chaque chemin optique de la lumière provenant de la source de lumière et qui est réfléchie par les premier, second et troisième modulateurs de lumière spatiaux respectifs, diffère des chemins optiques des images optiques provenant des dispositifs de visualisation respectifs, lorsque des champs électriques sont appliqués aux premier, second et troisième modulateurs de lumière spatiaux, et caractérisé en ce que la relation suivan-

te : $t_1/e_1 > t_2/e_2$ est établie entre les épaisseurs et les constantes diélectriques de la couche photoconductrice (16) et de la composition de cristaux liquides de chacun des modulateurs de lumière spatiaux.

3. Un dispositif selon la revendication 2, et caractérisé en ce que l'axe optique de l'un des dispositifs de visualisation est pratiquement orthogonal aux axes optiques des autres dispositifs de visualisation.

4. Un dispositif selon la revendication 3, dans lequel les axes optiques des autres dispositifs de visualisation sont mutuellement parallèles.

5. Un dispositif selon la revendication 3 ou la revendication 4, et caractérisé en ce que les moyens destinés à séparer la lumière qui provient de la source de lumière comprennent une paire de moyens dichroïques (24, 25).

6. Un dispositif selon la revendication 3, et caractérisé en ce que les dispositifs de visualisation et leurs modulateurs de lumière spatiaux associés sont disposés de façon pratiquement symétrique autour de quatre prismes dichroïques (26).

7. Un dispositif selon la revendication 1 ou l'une quelconque des revendications 2 à 6, et caractérisé en ce que le dispositif de visualisation ou chacun d'eux (3, 3B, etc.) est un tube cathodique.

8. Un dispositif selon la revendication 7, caractérisé en ce que le tube cathodique, ou chacun d'eux, comporte une dalle à optique de fibres (2) pour son écran de visualisation d'image, et la dalle à optique de fibres est fixée au modulateur de lumière spatial associé par l'intermédiaire d'une couche liquide transparente dont l'indice de réfraction est proche de celui de la dalle à optique de fibres.

9. Un dispositif selon la revendication 1 ou l'une quelconque des revendications 2 à 6, et caractérisé en ce que le dispositif de visualisation, ou chacun d'eux, est un récepteur de télévision à cristaux liquides (80) qui est illuminé par un faisceau de lumière ayant des spectres auxquels la couche photoconductrice du modulateur de lumière spatial réagit, et le faisceau de lumière est un faisceau de lumière qui tombe sur la couche photoconductrice après avoir traversé le récepteur de télévision à cristaux liquides.

10. Un dispositif selon la revendication 9, caractérisé en ce que le récepteur de télévision à cristaux liquide comporte une lame à optique de fibres (2″)

avec une électrode commune et transparente, et la lame à optique de fibres du récepteur de télévision à cristaux liquides est fixée sur la lame à optique de fibres du modulateur de lumière spatial par l'intermédiaire d'un polariseur et d'une couche liquide transparente dont l'indice de réfraction est proche de celui de la lame à optique de fibres.

FIG.1

FIG.2

EP 0 436 738 B1

FIG.3A

FIG.3B

FIG.4

EP 0 436 738 B1

FIG.5

FIG.6

FIG.7

EP 0 436 738 B1

FIG.8

FIG.9

FIG.10

FIG.11

FIG.12

FIG.13

FIG.14

FIG.15